# EUROPÄISCHE PATENTANMELDUNG

(11) **EP 2 500 164 A1**
(43) Veröffentlichungstag der Anmeldung: **19.09.2012**
(21) Anmeldenummer: 12155079.2
(22) Anmeldetag: 13.02.2012
(51) Int. Cl.: B29K 67/00, B29B 17/00

(54) **Anlage und Verfahren zum Recyceln von Kunststoffen, bevorzugt PET**

(30) Priorität: 15.03.2011 DE 102011005568
(71) Anmelder: Krones AG, 93073 Neutraubling (DE)
(72) Erfinder: Reese, Lars, 24943 Flensburg (DE); Haase, Arne, 24955 Harrislee (DE); Peters, Norbert, 24943 Flensburg (DE)
(74) Vertreter: Grünecker, Kinkeldey, Stockmair & Schwanhäusser

(57) **Zusammenfassung**

Es wird eine Anlage (1) und ein Verfahren zum Recyceln von Kunststoffen, insbesondere PET, beschrieben, wobei durch eine Umschalteinrichtung (3,12) zwischen einer ersten Prozesslinie (A) für einen ersten Herstellungsprozess zum Herstellen eines ersten Recyclingproduktes, insbesondere von Pellets, und einer zweiten Prozesslinie (B) für einen Herstellungsprozess zum Herstellen eines zweiten Recyclingproduktes, insbesondere von Flakes, umgeschaltet werden kann, um den Recyclingprozess flexibler zu gestalten.

## Beschreibung

Die Erfindung bezieht sich auf eine Anlage und ein Verfahren zum Recyceln von Kunststoffen, bevorzugt PET.

PET wird in großem Umfange für Behälter in der Lebensmittelindustrie, insbesondere für Getränkeflaschen, eingesetzt. Demzufolge fallen eine große Menge von verbrauchten und nicht mehr in den Befüllprozess zurückzuführenden Abfallbehälter an. Es gibt bereits Verfahren und Anlagen, diese Abfallbehälter zu recyceln und wieder zu lebensmitteltauglichem PET-Ausgangsmaterial zur Herstellung neuer Behälter zu verarbeiten. Eine derartige Recyclinganlage kann unter Umständen direkt einer Produktionsstrecke für die Herstellung neuer PET-Behälter vorgeschaltet sein, wobei beispielsweise das der Recyclinganlage entstammende Recyclingprodukt direkt in beispielsweise eine Spritzgießmaschine zum Herstellen von Preforms als Ausgangsprodukt für neue PET-Flaschen eingegeben werden kann.

Es existieren Recyclinganlagen für PET, die jeweils auf eine bestimmte Art des Recyclingproduktes ausgerichtet sind. So kann die Recyclinganlage beispielsweise zur Herstellung sogenannter Flakes oder zur Herstellung von Pellets ausgelegt sein. Flakes sind im Prinzip die Produkte aus einer Mahlvorrichtung, die gereinigt, sortiert und lebensmitteltauglich dekontaminiert wurden. Pellets sind Produkte aus einem Extruder, wo sie durch Wärmeeinwirkung homogenisiert wurden. Beide Herstellungsprozesse haben ihre Vor- und Nachteile. Die Vorteile des Flake-Prozesses liegen beispielsweise in einem geringeren Energieaufwand, in der Tatsache, dass sich kein Acetaldehyd aufbaut, dass die intrinsische Viskosität nicht abgebaut wird, gegebenenfalls enthaltene Fremdkunststoffe nicht verschmolzen werden können und die Trocknung bei niedrigen Temperaturen möglich ist. Nachteile des Flake-Prozesses sind, dass sich Flakes weniger als Zumischung zu neu hergestelltem PET (Virgin PET) eignen und Fremdkunststoffe oxidieren können. Die Vorteile des Pellet-Prozesses sind ein einfaches und unproblematisches Beimischen zu Virgin-Material und die Anwendung von Schmelzfilter-Filtrationstechnik zum Entfernen von Feinstpartikeln. Die Nachteile des Pellet-Prozesses ist ein erheblich größerer energetischer Aufwand, die Gefahr, dass sich Acetaldehyd aufbaut, und Fremdkunststoffe mitverschmelzen können, so dass sich kein homogenes PET ergibt.

Aufgrund dieser Tatsache sind beide Prozesse in Gebrauch und werden eingesetzt, je nachdem, wo die Interessenlage des Herstellers liegt. Ist jedoch eine Recyclinganlage einmal installiert, so ist der Benutzer auf diesen Prozess zumindest über die Lebensdauer der Anlage festgelegt.

Der Erfindung liegt die Aufgabe zugrunde, eine größere Flexibilität beim PET-Recyceln zu schaffen.

Die Aufgabe wird durch die Anlage nach Anspruch 1 und das Verfahren nach Anspruch 12 gelöst.

Durch die erfindungsgemäße Ausgestaltung wird der Benutzer in die Lage versetzt, nach Bedarf und nach den Voraussetzungen von einem Prozess auf den anderen umzuschalten.

Vorteilhafte Weiterbildungen der Erfindung sind den Unteransprüchen zu entnehmen.

Bevorzugt laufen beide Prozesse nicht strikt parallel, sondern sind ineinander vernetzt, wobei durch Materialflussweichen eine Umstellung von der einen Prozesslinie auf die andere Prozesslinie bewirkt werden kann. Die Vernetzung ist bevorzugt derart, dass so viel wie möglich der vorhandenen Anlagenbestandteile in beiden Prozesslinien genutzt werden können. Die Vernetzung kann auch über Bypass-Transportstrecken erfolgen, die gestatten, dass bestimmte Anlagenbestandteile in den verschiedenen Prozesslinien mit unterschiedlicher Reihenfolge angefahren werden. Dabei ist die Steuerung so ausgelegt, dass, falls erforderlich, gemeinsam benutzte Anlageteile nach unterschiedlichen Programmen und mit unterschiedlichen Parametern betrieben werden können.

Ein gemeinsam benutzbarer Anlagenbestandteil kann beispielsweise ein Vakuumreaktor sein, bei dem sich auf besonders einfache Weise eine Materialflussweiche vorsehen lässt, in dem beispielsweise zwei wechselweise betreibbare Ausgabepfade vorgesehen sind.

Ein Ausführungsbeispiel der Erfindung wird nachfolgend anhand der Zeichnungen näher erläutert. Es zeigen:
- Fig. 1: ein Blockschaltbild der erfindungsgemäßen Anlage zur Durchführung des erfindungsgemäßen Verfahrens, und
- Fig. 2: eine schematische, perspektivische Darstellung einer einem Reaktor zugeordneten Materialflussweiche.

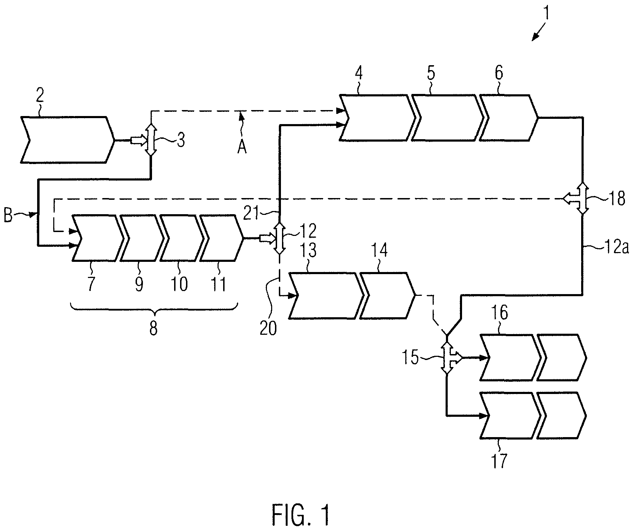

Fig. 1 zeigt ein Blockschaltbild einer erfindungsgemäßen Anlage 1 zum Recyceln von PET in ein Recyclingprodukt, das sich zur Herstellung von lebensmittelgeeigneten Behältern eignet. Die Erfindung ist jedoch auch bei Anlagen brauchbar, die recyceltes PET für eine nicht-sterile Anwendung bereitstellen, oder kann beim Recyceln anderer Kunststoffe eingesetzt werden.

Die erfindungsgemäße Anlage 1 enthält, in Fig. 1 nicht dargestellt, eine übliche Mahlvorrichtung, in der PET-Produkte zu Materialschnipseln oder -flocken, sogenannten Flakes, zerkleinert werden. Auch eine Waschanlage zum Entfernen von Etikettenresten oder Schmutz ist in Fig. 1 nicht dargestellt. Die Anlage 1 gemäß Fig. 1 beginnt beispielsweise mit einem Sichter 2 der Wascheinrichtung, durch den sichtbare Verunreinigungen entfernt werden. Am Ausgang des Sichters 2 befindet sich eine Umschalteinrichtung, z.B. in Form einer ersten Materialflussweiche 3, die den Materialfluss in eine gestrichelt gezeichnete erste Prozesslinie A und eine durchgezogen gezeichnete zweite Prozesslinie B leitet. Im dargestellten Ausführungsbeispiel enthält die erste Prozesslinie A die Anlagenbestandteile zur Herstellung eines ersten Recyclingproduktes, bevorzugt Pellets. Die Anlagenbestandteile der Prozesslinie A, die in der nachfolgenden Reihenfolge durchlaufen werden, sind ein Sichter 4 für Feinteile, ein Sieb 5 zum Entfernen der Feinteile, ein Farbsorter 6, der verfärbte oder falschfarbene Flakes aussortiert und ein Silo 7, das die gereinigten und gewaschenen Flakes sammelt. Dann schließt sich, z.B. über eine weitere Materialflussweiche 18, eine Dekontaminationsstufe 8 an, die im dargestellten Ausführungsbeispiel aus einer ersten Heizschnecke 9, einer zweiten Heizschnecke 10 und einem Vakuumreaktor 11 besteht. In den Heizschnecken werden die Flakes erwärmt, dann werden Restinhalte im Vakuumreaktor 11 abgezogen.

Dem Vakuumreaktor 11 ist eine Umschalteinrichtung, z.B. in Form einer weiteren, weiter unten noch näher erläuterten Materialweiche 12 zugeordnet, die zum Herstellen von Pellets in einen Extruder 13 führt, in dem die Flakes durch Erwärmen plastifiziert und in eine Form gebracht werden, aus der sie zu Pellets geformt werden können. Diese Pellets durchlaufen anschließend einen Kühler 14 und gelangen über eine weitere Materialflussweiche 15 entweder in Verpackungsbehälter 16 oder als Schüttladung in Transport-Container 17 oder, in Fig. 1 nicht dargestellt, werden direkt in eine Weiterverarbeitungsmaschine, beispielsweise eine Spritzgussmaschine zum Herstellen von Preforms für Getränkeflaschen, eingeleitet.

Die zweite Prozesslinie B enthält die Anlagebestandteile zur Herstellung eines zweiten Recyclingproduktes, bevorzugt Flakes, und übernimmt die Mehrzahl der Anlagebestandteile der Prozesslinie A, wobei jedoch einige Anlagebestandteile in abweichender Reihenfolge durchlaufen werden. Die nicht gezeigte Mahlvorrichtung und die Sichter/Wascheinrichtung 2 werden in der gleichen Reihenfolge wie in der Prozesslinie A durchlaufen. Die Materialflussweiche 3 wird so gestellt, dass die den Sichter 2 verlassenden Flakes sofort in das Silo 7 und von dort in die Dekontaminationseinrichtung 8 mit der ersten Heizschnecke 9, der zweiten Heizschnecke 10 und dem Vakuumreaktor 11 gelangen. Der Dekontaminationsprozess wird analog dem Pellet-Herstellungsprozess in der Prozesslinie A durchgeführt. Dann wird die Materialflussweiche 12 so gestellt, dass die Flakes den Sichter 4, die Siebeinrichtung 5 und den Farbsorter 6 durchlaufen, wodurch auch eventuell während des Erwärmens entstehenden verfärbten Flakes aussortiert werden können. Aus dem Farbsortierer 6 gelangen die Flakes über eine Bypassstrecke 12a unter Umgehung des Extruders 13 und des Kühlers 14 direkt zur Materialweiche 15, die sie auf die Abnehmer 16, 17 oder die Spritzgussmaschine verteilt.

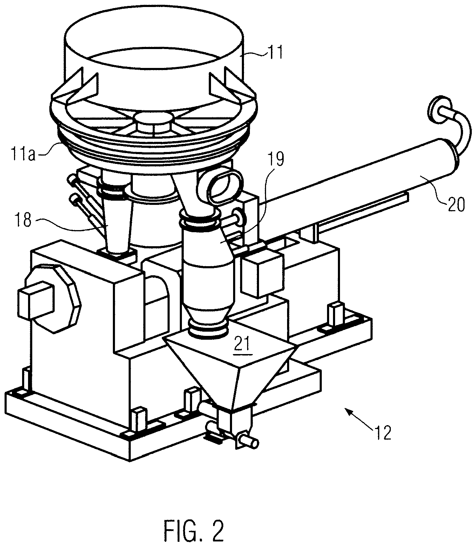

Fig. 2 zeigt in schematischer Darstellung die dem Vakuumreaktor 11 zugeordnete Materialweiche 12. Der Vakuumbehälter 11 enthält einen Vakuumboden 11a, der zwei zueinander beabstandete Auslassöffnungen 18 und 19 aufweist. Beide Auslässe 18, 19 sind als Schütteinrichtungen ausgebildet und, beispielsweise über einen Schieber oder einen Blinddeckel, zugänglich über eine Zugriffsöffnung, absperrbar. Der Auslass 18 führt in die Prozesslinie A, d.h. zum Extruder 13, beispielsweise über eine Leitung 20. Der Auslass 19 führt in die Prozesslinie B für Flakes und ist, beispielsweise über eine Schütte 21 mit dem Sichter 4 für Feinteile verbunden.

Die Steuerung der Anlage 1 ist so ausgelegt, dass der Benutzer lediglich eine bestimmte Prozesslinie A oder B vorwählen muss, um den gewünschten Prozess in Gang zu setzen. Gegebenenfalls kann, beispielsweise bei der Materialflussweiche 12, eine manuelle Umschaltung zum Öffnen und Schließen spezieller Zugrifföffnungen bzw. zum Einsetzen und Entfernen von Blinddeckeln erforderlich sein. Weiterhin sorgt die Steuerung dafür, dass Anlagenbestandteile, wie beispielsweise der Sichter 4, das Sieb 5, der Farbsorter 6 und die Dekontaminationseinrichtung 8 gemäß dem Herstellungsprozess für das erste Recyclingprodukt (Pellets) bzw. das zweite Recyclingprodukt (Flakes) mit unterschiedlichen Parametern, angepasst an den gewählten Prozess, betrieben werden. Derartige Parameter sind z.B. die Fördergeschwindigkeit bei kontinuierlichem oder diskontinuierlichem Betrieb, Haltezeiten, Temperaturen, wie Trocknungstemperaturen oder Temperatur von Förderorganen, Parameter von Sortern oder dgl..

Nachfolgend sollen anhand von Beispielen die Umschaltvorgänge näher erläutert werden.

### Beispiel 1

Die Anlage 1 befindet sich im Flake-Prozess und soll auf den Pellet-Prozess umgeschaltet werden. Dabei laufen die folgenden Vorgänge ab:
1. Der Benutzer wählt die Umschaltung auf den Pellet-Prozess.
2. Der Vakuumreaktor 11 gibt keine Flakes mehr ab und bricht das Vakuum.
3. Die Sichter/Wascheinrichtung 2 unterbricht die Förderung zur Dekontaminationseinrichtung 8.
4. Nachdem das Vakuum im Vakuumreaktor 11 gebrochen ist (was dem Benutzer angezeigt wird), wird die Materialflussweiche 12 umgestellt. Dazu muss die Zugriffsöffnung am Abwurf zum Pellet-Prozess geöffnet und der Blinddeckel für den Materialfluss entfernt werden. Danach ist die Prozesslinie A frei und diese Zugriffsöffnung wird wieder verschlossen. Als nächstes wird die Zugriffsöffnung am Abwurf zum Flake-Prozess geöffnet und dieser mit dem Blinddeckel verschlossen. Damit ist die Produktlinie B gesperrt. Jetzt wird die Zugriffsöffnung des Flake-Prozesses wieder verschlossen.
5. Der Sichter 4 für Feinteile, das Sieb 5 für Feinteile und der Farbsortere 6 laufen weiter, bis sie entleert sind.
6. Die weiteren Materialweichen 3 und 15 werden umgeschaltete.
7. Nach der Entleerung des Sichters 4, des Siebes 5 und des Farbsorters 6 werden die Parametersätze für den Betriebszustand der ersten Prozesslinie A für Pellets automatisch in die für beide Produktwege genutzten Anlagenbestandteile geladen.
8. Sind alle manuellen Umbauten abgeschlossen, wird dies der Steuerung mitgeteilt.
9. Die Sichter/Wascheinrichtung fördert wieder zum Dekontaminationsmodul 8.
10. Damit ist der Herstellungsprozess für Pellets gestartet und der Umbau abgeschlossen.

Die Steuerung erkennt, welcher der Herstellungsprozesse läuft und ist ohne weiteren Eingriff in der Lage, den dafür erforderlichen relevanten Parametersatz und die Weichenstellung der unterschiedlichen Produktwege automatisch zu schalten.

### Beispiel 2

Die Anlage befindet sich im Herstellungsprozess für Pellets und soll auf den Herstellungsprozess für Flakes umgeschaltet werden. Dabei sind folgende Maßnahmen erforderlich:
1. Der Benutzer wählt den gewünschten Herstellungsprozess (Flake-Prozess) vor.
2. Der Vakuumreaktor 11 gibt keine Flakes mehr ab und bricht das Vakuum.
3. Die Sichter/Wascheinrichtung unterbricht die Förderung zum Dekontaminationsmodul 8.
4. Nachdem das Vakuum im Vakuumreaktor 11 gebrochen ist (was dem Benutzer angezeigt wird), wird der Vakuumboden 11a umgebaut. Dazu muss die Zugriffsöffnung am Abwurf zum Flake-Prozess geöffnet und der Blinddeckel für den Materialfluss entfernt werden. Danach ist die Produktlinie B frei und diese Zugriffsöffnung wird wieder verschlossen. Als nächstes wird die Zugriffsöffnung am Abwurf für den Pellet-Prozess geöffnet und der Abwurf mit dem Blinddeckel und damit die Prozesslinie A verschlossen. Jetzt wird die Zugriffsöffnung für den Pellet-Prozess verschlossen.
5. Sichter 4 für Feinteile, Sieb 5 für Feinteile und Farbsorter 6 laufen weiter, bis sie entleert sind.
6. Die Materialweichen 3 und 15 werden umgeschaltet.
7. Nach der Entleerung des Sichters 4, des Siebes 5 und des Farbsorters 6 werden die Parametersätze für den Herstellungsprozess für Flakes automatisch in die für beide Produktlinien A und B genutzten Anlagebestandteile geladen.
8. Sind alle manuellen Umbauten abgeschlossen, wird dies der Steuerung mitgeteilt.
9. Die Sichter/Wascheinrichtung fördert wieder zum Dekontaminationsmodul 8.
10. Der Herstellungsprozess für Flakes ist gestartet und der Umbau abgeschlossen.

Die Steuerung erkennt den aktuell laufenden Herstellungsprozess und ist ohne weiteren Eingriff in der Lage, den relevanten Parametersatz und die Weichenstellung der unterschiedlichen Produktlinien A, B automatisch zu schalten.

In Abwandlung der beschriebenen und gezeichneten Ausführungsbeispiele können die Produktlinien zum einen mit unterschiedlichen Anlagebestandteilen, je nach Erfordernis, ausgerüstet und zum anderen auch zur Herstellung anderer Recyclingprodukte ausgebildet sein. Die Umschaltung kann weiterhin vollautomatisch, auch im Bereich der Materialweiche am Vakuumreaktor durch die Prozesssteuerung vorgenommen werden, wobei zwei wahlweise ansteuerbare Auslässe des Vakuumreaktors vorhanden sind.

## Patentansprüche

1. Anlage (1) zum Recyceln von Kunststoffen, bevorzugt PET, mit einer Umschalteinrichtung (3, 12) zum Umschalten zwischen einer ersten Prozesslinie (A) zum Herstellen eines ersten Recyclingproduktes, insbesondere von Pellets, und einer zweiten Prozesslinie (B) zum Herstellen eines zweiten Recyclingproduktes, insbesondere von Flakes.

2. Anlage nach Anspruch 1, **dadurch gekennzeichnet, dass** die Umschalteinrichtung (3, 12) wenigstens eine Materialflussweiche aufweist.

3. Anlage nach Anspruch 1 oder 2, **dadurch gekennzeichnet, dass** die erste und die zweite Prozesslinie (A, B) gemeinsame Anlagenbestandteile aufweisen.

4. Anlage nach Anspruch 3, **dadurch gekennzeichnet, dass** wenigstens eine Bypass-Transportstrecke (12a) zum Verbinden gemeinsamer Anlagebestandteile in unterschiedlicher Reihenfolge vorgesehen ist.

5. Anlage nach Anspruch 3 oder 4, **dadurch gekennzeichnet, dass** eine Steuerung zum Betrieb gemeinsamer Anlagebestandteile wahlweise entweder zum Herstellen des ersten oder zum Herstellen des zweiten Recyclingproduktes vorgesehen ist.

6. Anlage nach einem der Ansprüche 1 bis 5, **dadurch gekennzeichnet, dass** ein Vakuumreaktor (11) für beide Prozesslinien (A, B) vorgesehen ist.

7. Anlage nach Anspruch 6, **dadurch gekennzeichnet, dass** der Vakuumreaktor (11) eine Materialflussweiche (12) in seinem Ausgabebereich (11a) aufweist.

8. Anlage nach Anspruch 6 oder 7, **dadurch gekennzeichnet, dass** der Vakuumreaktor (11) zwei wechselweise betreibbare Ausgabepfade (18, 19) enthält.

9. Anlage nach einem der Ansprüche 1 bis 8, **dadurch gekennzeichnet, dass** die erste Prozesslinie (A) Anlagebestandteile (4, 5, 6) zum Entfernen von Verunreinigungen, Anlagebestandteile (9, 10, 11) für eine Dekontamination und einen Extruder (13) enthält, wobei die Anlagebestandteile (4, 5, 6) zum Entfernen von Verunreinigungen vor den Anlagebestandteilen (9, 10, 11) zur Dekontamination angeordnet sind.

10. Anlage nach einem der Ansprüche 1 bis 9, **dadurch gekennzeichnet, dass** die zweite Prozesslinie (B) Anlagebestandteile (4, 5, 6) zum Entfernen von Verunreinigungen und Anlagebestandteile (9, 10, 11) für eine Dekontamination enthält, wobei die Anlagebestandteile (4, 5, 6) zum Entfernen von Verunreinigungen nach den Anlagebestandteilen (9, 10, 11) zur Dekontamination angeordnet sind.

11. Anlage nach einem der Ansprüche 1 bis 10, **dadurch gekennzeichnet, dass** die erste und die zweite Prozesslinie (A, B) ein gemeinsames Anlagebestandteil zum Zerkleinern und ein gemeinsames Anlagebestandteil (2) zum Waschen enthalten.

12. Verfahren zum Recyceln von Kunststoffen, wie PET, mit einer Prozesssteuerung, die zwischen einem Herstellungsprozess zum Herstellen eines ersten Recyclingproduktes, insbesondere von Pellets, und einem zweiten Herstellungsprozess zum Herstellen eines zweiten Recyclingproduktes, insbesondere von Flakes, umgeschaltet werden kann.
